# EUROPÄISCHE PATENTANMELDUNG

(11) **EP 1 422 916 A1**
(43) Veröffentlichungstag der Anmeldung: **26.05.2004**
(21) Anmeldenummer: 03026745.4
(22) Anmeldetag: 21.11.2003
(51) Int. Cl.: H04M 3/46, H04M 3/42, H04M 7/00, H04M 1/253

(54) **Mehrfachregistrierung in Telefonsystemen**

(30) Priorität: 22.11.2002 DE 10254620
(71) Anmelder: innovaphone AG, 71065 Sindelfingen (DE)
(72) Erfinder: Diehl, Guntram, 71069 Sindelfingen (DE); Bode, Carsten, 71229 Leonberg (DE)
(74) Vertreter: Schoppe, Fritz, Dipl.-Ing.

(57) **Zusammenfassung**

Eine Telekommunikationszentrale zum Weiterleiten von ankommenden Anrufen zu einer Mehrzahl von Telefonendgeräten, die mit der Telekommunikationszentrale gekoppelt sind umfaßt eine Einrichtung zum Speichern von Informationen hinsichtlich Benutzern und hinsichtlich Telefonendgeräten, für die jeweilige Benutzer registriert sind, wobei die Einrichtung zum Speichern ermöglicht, daß ein Benutzer für mehrere Telefonendgeräte registriert ist und/oder daß mehrere Benutzer für ein Telefonendgerät registriert sind. Ferner ist eine Einrichtung zum Weiterleiten von für jeweilige Benutzer ankommenden Anrufen zu allen Telefonendgeräten, für die ein jeweiliger Benutzer registriert ist, unter Verwendung der in der Einrichtung zum Speichern gespeicherten Informationen vorgesehen.

## Beschreibung

Die vorliegende Erfindung bezieht sich auf Telefonsysteme und spezieller auf Telekommunikationszentralen und Telefonendgeräte für Telefonsysteme, und insbesondere solche Telekommunikationszentralen und Telefonendgeräte, die auf der sogenannten VoIP-Technologie (VoIP = Voice over Internet Protocol) basieren.

Ein herkömmliches Telefon von klassischen Telefonanlagen auf TDM-Basis (TDM = Time Division Multiplex = Zeitmultiplex) wird einer einzigen Person zugeteilt. Die Sicherheit besteht darin, daß die zugeteilte Person für dieses Telefon verantwortlich ist. Als einziger vom Telefon gebotener Sicherheitsmechanismus ist in Ausnahmefällen eine Tastatursperre verfügbar.

Bei Telefonanlagen, die auf der VoIP-Technologie basieren, werden alle Endgeräte an ein hausinternes Datennetz angeschlossen, auf dem unter Verwendung des IP-Protokolls (IP = Internet Protocol = Internetprotokoll) kommuniziert wird. Eine eindeutige Zuordnung der Leitung zu einem einzelnen Telefon ist damit nicht mehr gegeben. Teilnehmer in VoIP-Telefonanlagen benutzen ihr jeweiliges Endgerät zum Registrieren mit dessen eindeutigen Werten im Datennetz, wie beispielsweise der IP-Adresse und der zugehörigen Port-Nummer.

Es ist die Aufgabe der vorliegenden Erfindung, eine Telekommunikationszentrale, ein Telefonendgerät, ein Verfahren zum Steuern eines Telekommunikationssystems und ein Computerprogramm zum Steuern eines Telekommunikationssystems zu schaffen, die die Realisierung eines sicheren und zugleich flexiblen Telefonsystems ermöglichen.

Diese Aufgabe wird durch eine Telekommunikationszentrale gemäß Anspruch 1, ein Telefonendgerät gemäß Anspruch 11, ein Verfahren zum Steuern eines Telekommunikationssystems gemäß Anspruch 13 und ein Computerprogramm gemäß Anspruch 24 gelöst.

Die vorliegende Erfindung schafft eine Telekommunikationszentrale zum Weiterleiten von ankommenden Anrufen zu einer Mehrzahl von Telefonendgeräten, die mit der Zentrale gekoppelt sind, mit folgenden Merkmalen:
einer Einrichtung zum Speichern von Informationen hinsichtlich Benutzern und hinsichtlich Telefonendgeräten, für die jeweilige Benutzer registriert sind, wobei die Einrichtung zum Speichern ermöglicht, daß ein Benutzer für mehrere Telefonendgeräte registriert ist und/oder daß mehrere Benutzer für ein Telefonendgerät registriert sind; und
eine Einrichtung zum Weiterleiten von für jeweilige Benutzer ankommenden Anrufen zu allen Telefonendgeräten, für die ein jeweiliger Benutzer registriert ist, unter Verwendung der in der Einrichtung zum Speichern gespeicherten Informationen.

Durch die Mehrfachregistrierung gemäß der vorliegenden Erfindung, bei der sich ein Benutzer für mehrere Telefonendgeräte registrieren kann bzw. bei der sich mehrere Benutzer für ein Telefonendgerät registrieren können, ist es möglich, die Zuordnung des Benutzers vom physikalischen Telefonapparat, d. h. Telefonendgerät, zu trennen. Somit ist es möglich, dynamisch Benutzer an- und abzumelden. Dabei können die Benutzer gleichzeitig auf mehreren Telefonapparaten angemeldet sein, während auch das Anmelden von mehreren Nutzern auf einem Telefonapparat möglich ist.

Die Mehrfachregistrierung setzt voraus, daß die Telefonanlage, d. h. die Telekommunikationszentrale, die Registrierung einer Rufnummer, bei der es sich um die einem jeweiligen Benutzer zugeordnete Kennung handelt, auf mehrere Telefone erlauben kann. Dies ist erfindungsgemäß durch die Einrichtung zum Speichern von Informationen hinsichtlich Benutzern und hinsichtlich Telefonendgeräten, für die jeweilige Benutzer registriert sind, möglich.

Die Registrierung eines Benutzers für ein Telefonendgerät kann beispielsweise erfolgen, indem der Benutzer eine ihm zugeordnete Identifikation, beispielsweise seinen Namen, an dem Telefonendgerät eingibt. Der Name wird zusammen mit der Hardware-ID zu der Telekommunikationszentrale geleitet, die vermerkt, daß der Benutzer an diesem Telefonendgerät, d. h. an der Endpunktadresse desselben, zu erreichen ist. Vorzugsweise ist ferner eine verschlüsselte Authentifizierung vorgesehen, dahingehend, daß der Benutzer, um sich für ein Telefonendgerät anzumelden, zusammen mit seinem Namen ein Paßwort an dem Telefonendgerät einzugeben hat, so daß der Benutzer auf der Grundlage des Namens und des Paßworts an der Telekommunikationszentrale authentifiziert werden kann. Vorzugsweise erfolgt die Datenübertragung zwischen Telefonendgeräten und Telekommunikationszentrale nach dem H.235-Unterstandard für Datensicherheit des H.323-Standard, so daß der Schutz vor Mißbrauch mittels verschlüsselter Authentifizierung nach wie vor gegeben ist.

Bei einer Telekommunikationszentrale gemäß der vorliegenden Erfindung sollte es aus Sicherheitsgründen ferner frei konfigurierbar sein, ob eine Mehrfachregistrierung erlaubt ist. Sobald eine Mehrfachregistrierung erlaubt worden ist, kann weiterhin eingeschränkt werden, wie viele Registrierungen erlaubt sind. Dies kann sich sowohl darauf beziehen, für wie viele Telefonendgeräte sich ein Benutzer registrieren kann oder wie viele Benutzer sich für ein Endgerät registrieren können. Darüber hinaus können unterschiedliche Benutzer unterschiedliche Rechte hinsichtlich der Anzahl von erlaubten Registrierungen besitzen.

Sobald sich ein Benutzer an einem Telefonendgerät registriert hat, werden eingehende Rufe für seine Durchwahl an diesem und allen anderen Telefonen, für die der Benutzer registriert ist, signalisiert. Sind mehrere Benutzer an einem Telefon angemeldet bzw. registriert, werden die Rufe aller Benutzer auf diesem Telefon gemeldet bzw. signalisiert. Um die Zuordnung zu erleichtern, wird auf dem Display des entsprechenden Telefons basierend auf der Durchwahl des Rufs angezeigt, an welchen Benutzer der eingehende Ruf gerichtet ist. Sind mehrere Benutzer für ein Telefonendgerät registriert, wird vorzugsweise einer der Benutzer in dem Telefonendgerät als aktiver Nutzer deklariert, wobei für ausgehende Rufe von einem solchen Telefonendgerät die Kennung des Benutzers gesendet wird, der als aktiver Nutzer deklariert ist. Der aktive Nutzer kann beispielsweise der Benutzer sein, der zuletzt für dieses Telefonendgerät registriert wurde, wobei es alternativ möglich ist, den aktiven Nutzer vor jedem Ruf neu zu setzen.

Die vorliegende Erfindung schafft ferner ein Telefonendgerät für eine derartige Telekommunikationszentrale mit folgenden Merkmalen:
einer Benutzerschnittstelle zum Eingeben der Registrierungsdaten in das Telefonendgerät; und
einer Einrichtung zum Weiterleiten der Registrierungsdaten zu der Telekommunikationszentrale.

Bei der Benutzerschnittstelle zum Eingeben der Registrierungsdaten handelt es sich dabei vorzugsweise um die Anzeige und Tastatur eines Telefonendgeräts, die sich entweder auf dem Telefongerät oder dem Telefonhörer befinden kann. Ferner kommen sämtliche anderen Arten von Benutzerschnittstellen, die zur Eingabe von Registrierungsdaten geeignet sind, in Frage, beispielsweise Spracherkennungssysteme und dergleichen. Die Benutzerschnittstelle ermöglicht ferner die Eingabe einer Abmeldeaufforderung zur Weiterleitung zu der Telekommunikationszentrale. Somit ermöglicht das erfindungsgemäße Telefonendgerät ein Anmelden bzw. Abmelden eines jeweiligen Benutzers an einem jeweiligen Telefonendgerät.

Die vorliegende Erfindung schafft ferner ein Verfahren zum Steuern eines Telekommunikationssystems mit einer Telekommunikationszentrale und einer Mehrzahl von Telefonendgeräten, die mit der Telekommunikationszentrale gekoppelt sind, mit folgenden Schritten:
Speichern von Informationen hinsichtlich Benutzern und hinsichtlich Telefonendgeräten, für die jeweilige Benutzer registriert sind, wobei ein Benutzer für mehrere Telefonendgeräte registriert werden kann und/oder mehrere Benutzer für ein Telefonendgerät registriert werden können; und
Weiterleiten von für jeweilige Benutzer ankommenden Anrufen zu allen Telefonendgeräten, für die ein jeweiliger Benutzer registriert ist, unter Verwendung der gespeicherten Informationen.

Wie oben ausgeführt wurde, registrieren sich die Benutzer vorzugsweise jeweils unter Verwendung ihres Namens und eines Paßworts, um eine verschlüsselte Authentifizierung zu ermöglichen. Im einfachsten Fall wird ein Benutzer für ein Telefonendgerät registriert, indem eine Aktiv-Flag in einem Datensatz für den entsprechenden Benutzer und das entsprechende Telefonendgerät gesetzt wird.

Die erfindungsgemäße Telekommunikationszentrale und das erfindungsgemäße Verfahren können vorteilhaft als ein Computerprogramm implementiert sein, das auf Betriebssystemen der Telekommunikationszentrale bzw. des Telefonendgeräts ablaufen kann. Die Betriebssysteme von Telekommunikationszentrale und Telefonendgerät kommunizieren dabei über das IP-Netz, durch das die Telefonanlage mit den Telefonendgeräten gekoppelt ist.

Die vorliegende Erfindung gibt vollkommen neue Möglichkeiten bei der Konfiguration eines Telefonsystems. Funktionen, wie geteilte Hotline, ein sich frei bewegender Nutzer im Hause und andere Funktionen können einfach und effektiv eingesetzt werden, wobei diese Anwendungen allesamt auf offenen Standards und unter Einhaltung der gebräuchlichen Sicherheitserwartungen implementiert sein können. Die vorliegende Erfindung eignet sich zur Implementierung von Telefonanlagen innerhalb geschlossener Gebäude- bzw. Bürokomplexe, kann jedoch auch in verteilten Umgebungen, bei denen eine Telefonanlage zur Steuerung einer Vielzahl von räumlich getrennten Telefonendgeräten verwendet ist, zum Einsatz kommen. Dabei kann die Kopplung zwischen Telekommunikationsanlage und Telefonendgeräten auch über das Internet erfolgen.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines auf der VoIP-Technologie basierenden Telefonsystems;
- Fig. 2: eine schematische Darstellung eines bei dem System von Fig. 1 verwendeten Telefonendgeräts;
- Fig. 3: eine schematische Darstellung der bei dem System von Fig. 1 verwendeten Telefonanlage;
- Fig. 4: eine Darstellung einer in der Telefonanlage gespeicherten Benutzerdatenbank;
- Fig. 5: ein Flußdiagramm der bei einem Ausführungsbeispiel eines erfindungsgemäßen Verfahrens zur Durchführung einer Mehrfachregistrierung an einem Telefon auftretenden Schritte; und
- Fig. 6: ein Flußdiagramm von bei einem Ausführungsbeispiel eines erfindungsgemäßen Verfahrens zur Mehrfachregistrierung eines Benutzers an verschiedenen Telefonen auftretenden Schritten.

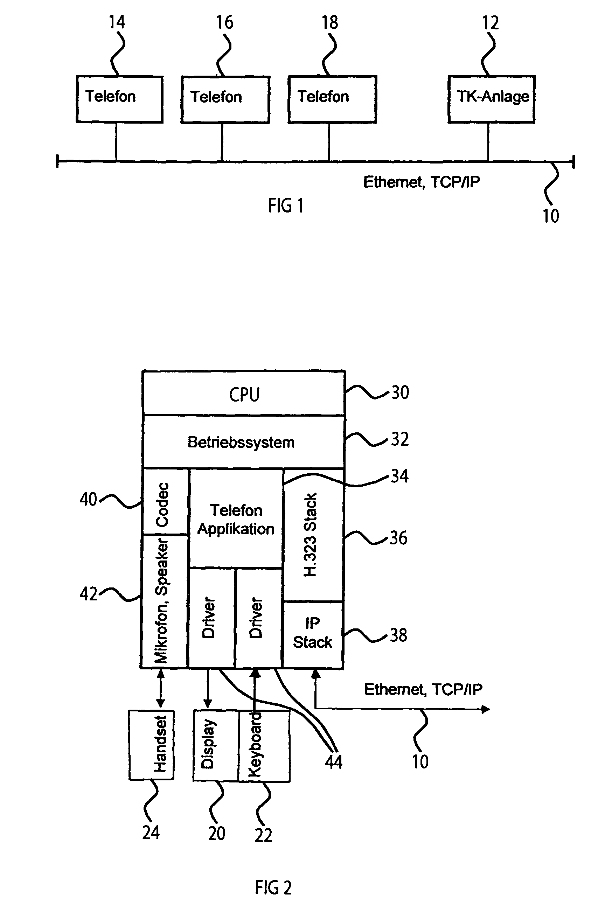

Ein Beispiel eines Telefonsystems, bei dem die erfindungsgemäße Mehrfachregistrierung implementiert werden kann, in der Form eines Telefonsystems, das auf der VoIP-Technologie basiert, ist in Fig. 1 gezeigt. Dabei bedeutet VoIP, daß die Sprache statt auf dedizierten Telefonleitungen über das Datennetz 10, beispielsweise einer Firma, übertragen wird. Bei diesem Datennetz kann es sich beispielsweise um ein Ethernet handeln, über das die Daten nach einem Internetprotokoll, beispielsweise dem TCP/IP, übertragen werden.

Wie in Fig. 1 gezeigt ist, sind eine TK-Anlage 12 (TK = Telekommunikation), die eine Telekommunikationszentrale darstellt, und Telefonendgeräte 14, 16 und 18 direkt an das Datennetz 10 angeschlossen. Die Verwaltung der Telefonendgeräte 14 - 18 erfolgt über die TK-Anlage 12 und ist insbesondere durch eine zentrale Telekommunikationsanlagensoftware in derselben realisiert. Insofern besitzt das in Fig. 1 gezeigte Telefonsystem einen herkömmlichen Aufbau.

Fig. 2 zeigt eine schematische Darstellung eines VoIP-Telefonendgeräts. Dieses Telefonendgerät kann als Mobilteil ausgebildet sein, bei dem Tastatur und Anzeige in das Handgerät integriert sind, oder als ein Telefongerät, bei dem Anzeige 20 und Tastatur 22 getrennt von dem Telefonhörer 24 ausgebildet sind.

Um über das IP-Protokoll mit dem Datennetz kommunizieren zu können, besitzt das Telefonendgerät eine geeignete Software, wobei das Telefon einen ähnlichen Aufbau wie ein Computer besitzt. Auf einer zentralen Verarbeitungseinheit bzw. einem zentralen Prozessor 30 läuft ein Betriebssystem 32, das die in einem Speicher 34 abgelegte Telefonanwendungssoftware organisiert. Die Telefonanwendungssoftware steuert den internen Ablauf im Telefon und kommuniziert unter Verwendung des Betriebssystems 32 über einen H.323-Stapel 36 und einen IP-Stapel 38 mit dem Datennetz 10 und somit mit der in der TK-Anlage 12 gespeicherten Telekommunikationsanlagensoftware. Unter Stapel ist dabei eine Protokollabarbeitungssoftware zu verstehen. Über dieses Datennetz werden sowohl Steuerungsdaten als auch Sprachdaten übertragen. Die Sprachdaten werden über einen Codec 40, der mit Lautsprecher und Mikrophon 42 des Hörers bzw. Handgeräts 24 verbunden ist, decodiert bzw. codiert. Die Steuerung am Telefonendgerät erfolgt über die eine Benutzerschnittstelle darstellenden Bedienelemente, Display 20 und Tastatur 22, die in bekannter Weise über dafür vorgesehene Treiber 44 angesteuert werden. Sämtliche Signale, die von dem Telefonendgerät über das Datennetz 10 übertragen werden, durchlaufen den H.323-Stapel und den IP-Stapel, so daß das Telefonendgerät nach dem H.323-Standard arbeitet. Alternativ zu dem H.323-Standart existieren weitere proprietäre Protokolle, die als Sicherheitsstandard verwendet werden können, z.B. SIP, Skinny und dergleichen.

Hinsichtlich der obigen Beschreibungen entspricht das in Fig. 2 gezeigte und oben beschriebene Telefonendgerät mit Ausnahme der durch die Mehrfachregistrierung bedingten Merkmale, die nachfolgend erläutert werden, einem herkömmlichen VoIP-Telefonendgerät.

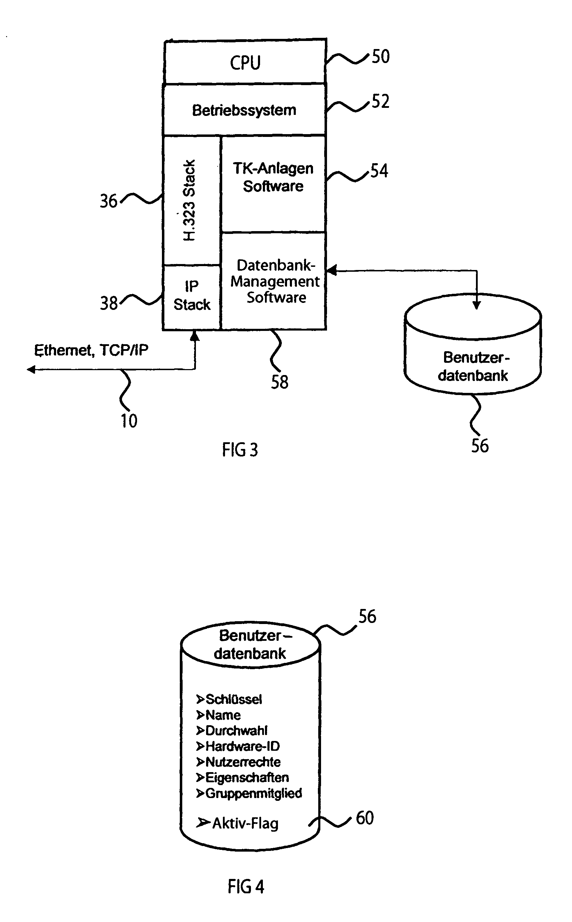

Die in Fig. 3 schematisch dargestellte Telekommunikationszentrale besitzt ebenfalls einen computerartigen Aufbau mit einer zentralen Verarbeitungseinheit 50, die ein Betriebssystem 52 ausführt, und einem Speicher, in dem die Telekommunikationsanlagensoftware 54 gespeichert ist. Die Telekommunikationsanlagensoftware 54 ist eine reine Steuerungssoftware für das gesamte Telekommunikationsnetz. Dieselbe regelt den Verbindungsaufbau und den Verbindungsabbau und schaltet die Datenkanäle für Sprache zwischen den Telefonendgeräten zu und wieder ab. Für die dazu erforderliche Kommunikation über das Datennetz 10 umfaßt auch die Telekommunikationszentrale einen H.323-Stapel 36 und einen IP-Stapel 38. Informationen hinsichtlich der Regeln im Netz sind in einer Benutzerdatenbank 56 abgelegt, wobei die intelligente Verarbeitung der in der Benutzerdatenbank 56 abgelegten Daten von einer Datenbankverwaltungssoftware 58, die zu diesem Zweck mit der Benutzerdatenbank gekoppelt ist, durchgeführt wird.

Die Benutzerdatenbank 56 wird vom Administrator der Telefonanlage aufgesetzt, gepflegt und aktualisiert. Dieselbe enthält für jeden Benutzer, d. h. bei herkömmlichen Anlagen für jedes Telefonendgerät, einen Mindestumfang an Informationen. Ein Beispiel von Informationen, die in der Benutzerdatenbank 56 abgelegt sein können, ist in Fig. 4 gezeigt. Diese Informationen können einen Schlüssel umfassen, der eine eindeutige Kennung eines Benutzers in der Benutzerdatenbank darstellt. Ferner enthält die Benutzerdatenbank den Namen des Benutzers sowie die Durchwahl, über die der Benutzer in dem Telefonnetz bzw. Telefonsystem erreicht werden kann. Bei dieser Durchwahl wird es sich in der Regel um die letzten Stellen der Direktwahlnummer des jeweiligen Benutzers, beispielsweise die letzten zwei, drei oder vier Stellen, je nach Größe des Telefonnetzes, handeln.

Die Benutzerdatenbank 56 enthält ferner eine Hardware-ID eines Telefonendgeräts, das dem angegebenen Benutzer zugeordnet ist. Diese Hardware-ID, wobei jedes Telefonendgerät eine eindeutige Hardware-ID aufweist, erlaubt eine eindeutige Zuordnung, an welches Telefonendgerät ein Anruf mit der angegebenen Durchwahl weitergeleitet werden soll.

Ferner enthält die Benutzerdatenbank 56 üblicherweise weitere Informationen bezüglich des angegebenen Benutzers, beispielsweise hinsichtlich der Nutzerrechte desselben, hinsichtlich eingestellter Eigenschaften des Telefonsystems für diesen Benutzer und hinsichtlich möglicher Zugehörigkeiten dieses Benutzers zu Gruppen, für die bestimmte Eigenschaften definiert sein können.

Zusätzlich zu den in der Benutzerdatenbank 56 vorgegebenen Informationen kann die Datenbankverwaltungssoftware 58 weitere temporäre Informationen speichern, wie z. B. hinsichtlich der Verfügbarkeit des Benutzers, möglicher gewählter Rufumleitungen oder Besetzt-Informationen.

Bis zu dieser Stelle entspricht das oben Bezug nehmend auf die Fig. 1 - 4 beschriebene VoIP-Telefonsystem im wesentlichen einem bekannten Telefonsystem. Im folgenden wird nun die erfindungsgemäße Mehrfachregistrierung anhand eines solchen Telefonsystems erläutert.

Die vorliegende Erfindung ermöglicht unter Ausnutzung der VoIP-Technologie Mehrfachregistrierungen in Telekommunikationsanlagen durch entsprechende Modifikation und Anpassung der Telefonanwendungssoftware 34 auf Seiten des Telefonendgeräts sowie der TK-Anlagensoftware 54, der Datenbankmanagementsoftware 58 sowie der Benutzerdaten 56 auf Seiten der Telekommunikationszentrale.

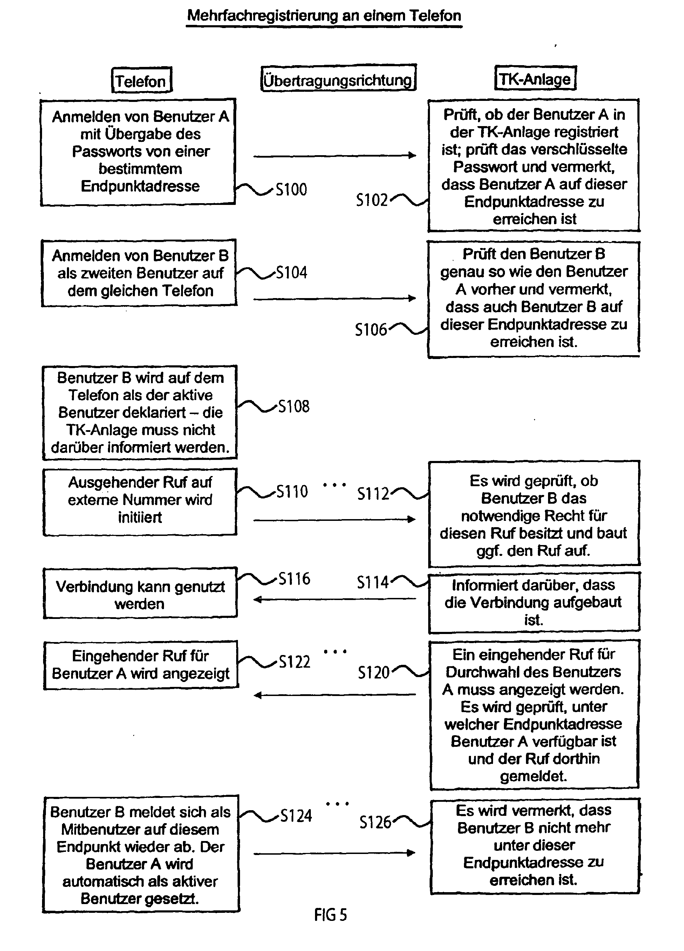

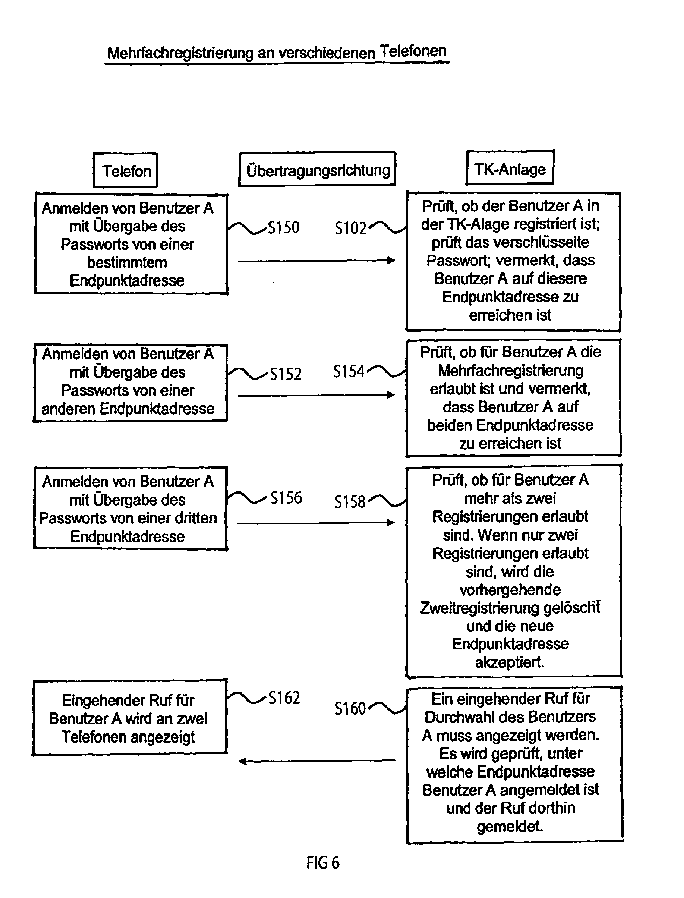

Die vorliegende Erfindung wird nachfolgend Bezug nehmend auf die Flußdiagramme der Fig. 5 und 6 unter weiterer Bezugnahme auf die Fig. 1 - 4, in der das Telefonsystem, in dem die vorliegende Erfindung implementiert sein kann, dargestellt ist, beschrieben.

Erfindungsgemäß kann die in Fig. 4 gezeigte Benutzerdatenbank 56 die Datenbank sein, die für einen Benutzer die Hardware-ID enthält, die dem Telefon, das sich am Arbeitsplatz dieses Benutzers befindet, zugeordnet ist. Für dieses Telefon ist der Benutzer normalerweise registriert, wobei eine Aktiv-Flag 60 vorgesehen sein kann, die gesetzt ist bzw. wird, wenn der Benutzer in das Telefonsystem bzw. Telefonnetz angemeldet ist bzw. wird. Das Aktiv-Flag 60 wird durch die TK-Anlagensoftware 54 gesetzt bzw. nach dem Abmelden des Benutzers aus dem Telefonnetz wieder zurückgesetzt. Soll ein Anruf von der TK-Anlagensoftware 54 entsprechend der Durchwahl des Anrufs einem Benutzer zugeordnet werden, nutzt die TK-Anlagensoftware die Aktiv-Flags beim Durchsuchen der Datenbank.

Bezug nehmend auf Fig. 5 wird nun zunächst die Mehrfachregistrierung von mehreren Benutzern an einem Telefon beschrieben.

Im Schritt S100 meldet sich ein Benutzer A von einem Telefonendgerät aus, d. h. von einer bestimmten Endpunktadresse, die beispielsweise durch die Hardware-ID des Telefonendgeräts gegeben ist. Um diese Anmeldung zu realisieren, gibt der Benutzer A Namen und Paßwort über die Tastatur 22, d. h. die Benutzerschnittstelle, in das Telefonendgerät ein. Name und Paßwort des Benutzers, die als Registrierungsdaten bzw. Anmeldedaten dienen, werden von dem Telefonendgerät über das Datennetz 10 zu der TK-Anlage 12 gesendet. Die TK-Anlage bzw. die TK-Anlagensoftware prüft, ob der Benutzer A in der TK-Anlage registriert ist und prüft das verschlüsselte Paßwort. Besteht das verschlüsselte Paßwort die Überprüfung, vermerkt die TK-Anlage, daß der Benutzer A auf dieser Endpunktadresse zu erreichen ist. Damit ist der Benutzer A für das entsprechende Telefonendgerät registriert.

Die obige Anmeldung unter Verwendung von Benutzername und Paßwort entspricht dem H.235-Standard, der die Eingabe dieser Daten verlangt. Dabei muß das Benutzername/Paßwort-Paar mit den Werten übereinstimmen, die an der Telefonanlage konfiguriert worden sind und beispielsweise in der Benutzerdatenbank abgelegt sind. Da die TK-Anlage aufgrund der übersandten Daten weiß, von welchem Telefonendgerät aus Benutzername und Paßwort gesendet wurden, kann die TK-Anlage diese Informationen verwenden, um zu vermerken, daß der Benutzer A auf dieser Endpunktadresse, d. h. unter dieser Hardware-ID, zu erreichen ist, siehe Schritt S102 in Fig. 5.

Das Vermerken, daß der Benutzer A auf dieser Endpunktadresse zu erreichen ist, kann beispielsweise darin bestehen, die Aktiv-Flag 60 zu setzen, wenn die Endpunktadresse der Hardware-ID des dem Benutzer ursprünglich zugeordneten Telefonendgeräts entspricht. Falls es sich bei der Endpunktadresse um die Hardware-ID eines anderen Telefonendgeräts handelt, kann die TK-Anlage beispielsweise eine temporäre Kopie des für den Benutzer in der Benutzerdatenbank 56 gespeicherten Datensatzes anlegen, in dem die Hardware-ID des anderen Telefonendgeräts angegeben ist, und in der die Aktiv-Flag gesetzt ist. Dies wird später Bezug nehmend auf Fig. 6 erläutert.

Mit den Schritten S100 und S102 wurde somit der Benutzer A für ein Telefonendgerät, beispielsweise das Telefonendgerät 14, registriert. Optional kann die TK-Anlage nun eine Bestätigung an das Telefonendgerät senden, um demselben mitzuteilen, daß der Benutzer A für dasselbe registriert wurde, wobei diese Mitteilung in dem Telefonendgerät abgelegt werden kann.

In einem Schritt S104 meldet sich ein Benutzer B als zweiter Benutzer auf dem gleichen Telefon, beispielsweise dem Telefonendgerät 14, an. Dies geschieht äquivalent zu der Anmeldung des Benutzers A. Die Registrierungsdaten des Benutzers B, d. h. der Benutzername und das Paßwort, wie sie durch den Benutzer B eingegeben wurden, werden über das Datennetz 10 wiederum zu der TK-Anlage gesendet, die wie vorher beim Benutzer A eine Authentifizierung des Benutzers B durchführt und ebenfalls in äquivalenter Weise vermerkt, daß auch der Benutzer B auf der dem Telefonendgerät 14 zugeordneten Endpunktadresse (Hardware-ID) zu erreichen ist, Schritt S106. Wiederum kann die TK-Anlage optional eine Bestätigung zu dem Telefonendgerät senden.

Da der Benutzer B der letzte Benutzer war, der für das Telefonendgerät 14 registriert wurde, kann der Benutzer B auf dem Telefonendgerät 14 als der aktive Benutzer deklariert werden, Schritt S108. Diese Informationen werden durch die Telefonanwendungssoftware 34 in einem Speicher des Telefonendgeräts abgelegt, so daß dieselben später wiedergewonnen werden können. Die TK-Anlage 12 muß nicht darüber informiert werden, daß der Benutzer B als der aktive Benutzer deklariert wurde. Optional kann diese Information jedoch auch der TK-Anlage mitgeteilt werden, um diese Information als Zusatzinformation auf der Benutzerdatenbank zu speichern. Die Benutzerschnittstelle des Telefonendgeräts kann ferner einen Menüpunkt aufweisen, der es ermöglicht, eine bestimmten Benutzer als aktiven Benutzer zu deklarieren.

Durch die oben angegebenen Schritte wurden die Benutzer A und B für das Telefonendgerät 14 registriert.

Ausgehend von dieser Situation wird nun über die Tastatur 22 eine externe Rufnummer in das Telefonendgerät 14 eingegeben, so daß ein ausgehender Ruf auf die eingegebene externe Rufnummer initiiert wird, Schritt S110. Die externe Rufnummer wird der TK-Anlage übersandt, in der, zugreifend auf die Benutzerdatenbank 56, geprüft wird, ob der Benutzer B das notwendige Recht für diesen Ruf besitzt. Falls der Benutzer B das notwendige Recht besitzt, baut die TK-Anlage den Ruf auf, Schritt S112. Andernfalls baut sie den Ruf nicht auf, wobei sie optional eine Mitteilung an das Telefonendgerät 14 zurücksenden kann, das daraufhin auf seinem Display 20 eine entsprechende Anzeige erzeugen kann, dahingehend, daß der Benutzer B für den entsprechenden Ruf nicht autorisiert ist.

Ist der Benutzer B für den getätigten Ruf autorisiert und hat die TK-Anlage den Ruf aufgebaut (Schritt S112), informiert sie das Telefonendgerät 14 darüber, daß die Verbindung aufgebaut ist, Schritt S114. Im Anschluß kann die Verbindung auf Seiten des Telefonendgeräts 14 durch den Benutzer genutzt werden, Schritt S116, bis die Verbindung dann durch den Benutzer, beispielsweise durch Auflegen des Hörers, beendet wird.

Bei einem Schritt S120 wird an der TK-Anlage 12 ein eingehender Ruf für die Durchwahl des Benutzers A empfangen. Die Durchwahl ist die dem Benutzer zugeordnete Telefonnummer, die externen oder firmeninternen Personen als die Nummer, unter der der Benutzer im Telefonnetz zu erreichen ist, bekannt ist. Die TK-Anlage untersucht basierend auf der empfangenen Durchwahl des Benutzers die Benutzerdatenbank nach Telefonendgeräten, für die der Benutzer A registriert ist, um zu prüfen, unter welcher Endpunktadresse der Benutzer A verfügbar ist. Dies kann beispielsweise geschehen, indem die TK-Anlagensoftware bzw. die Datenbankverwaltungssoftware die Benutzerdatenbank nach dem Benutzer zugeordneten Datensätzen durchsucht, deren Aktiv-Flag gesetzt ist. Im obigen Fall ist der Benutzer A für das Telefonendgerät 14 registriert, so daß die TK-Anlage den eingehenden Ruf an das Telefonendgerät 14 meldet bzw. signalisiert. Das Telefonendgerät 14 wird diesen Ruf dann durch Klingeln oder durch eine optische Anzeige auf dem Display desselben dem Benutzer signalisieren, Schritt 122.

Entsprechend würde ein Anruf für den Benutzer B zu dem Telefonendgerät 14, für das derselbe registriert ist, durchgestellt werden, wenn ein solcher Anruf, extern oder intern, bei der TK-Anlage eingeht.

Bei einem Schritt S124 meldet sich nun der Benutzer B als Mitbenutzer von dem Telefonendgerät 14 ab. Zu diesem Zweck kann die Benutzerschnittstelle des Telefonendgeräts einen entsprechenden Menüpunkt umfassen, der von den Benutzern ausgewählt werden kann, um sich abzumelden. Bei diesem Menüpunkt wird es sich in der Regel um eine Option auf dem Display 20 des Telefonendgeräts handeln, die durch die Tastatur 22 ausgewählt werden kann, wie es für verschiedene andere Optionen bei herkömmlichen Telefonen bekannt ist. Nachdem der Benutzer B im Schritt S108 als der aktive Benutzer deklariert wurde, wird nach dem Abmelden desselben der Benutzer A automatisch als aktiver Benutzer gesetzt, was in dem Telefonendgerät gespeichert wird. Durch das Auswählen des Menüpunkts, der eine Abmeldung des Benutzers B zur Folge hat, wird eine entsprechende Abmeldeaufforderung über das Datennetz 10 zu der TK-Anlage gesendet, die vermerkt, daß der Benutzer B nicht mehr unter dieser Endpunktadresse (die dem Telefonendgerät 14 zugeordnet ist) zu erreichen ist, Schritt S126. Dies kann entweder geschehen, indem in dem Datensatz des Benutzers B, in dem die Hardware-ID des Telefonendgeräts 14 gespeichert ist, die Aktiv-Flag zurückgesetzt wird. Alternativ kann ein temporär für die Hardware-ID des Telefonendgeräts 14 erzeugter Datensatz aus der Benutzerdatenbank gelöscht werden, um die Registrierung des Benutzers B für dieses Telefonendgerät aufzuheben.

Nachdem oben nun die Registrierung mehrerer Benutzer an einem Telefonendgerät Bezug nehmend auf Fig. 5 erläutert wurde, wird nun Bezug nehmend auf die Fig. 6 auf die Mehrfachregistrierung eines Benutzers an verschiedenen Telefonen eingegangen.

Zunächst meldet sich der Benutzer A wiederum durch Eingabe von Namen und Paßwort an einer bestimmten Endpunktadresse, beispielsweise der Endpunktadresse des Telefonendgeräts 14, an, Schritt S150. Die entsprechenden Registrierungsdaten werden über das Datennetz 10 an die TK-Anlage 12 übermittelt, die den Benutzer A für das Telefonendgerät 14 registriert, wobei die hierbei durchgeführten Aktionen denen des Bezug nehmend auf Fig. 5 erläuterten Schritts S102 entsprechen, wie durch die Verwendung des identischen Bezugszeichens für diesen Schritt angedeutet ist.

Nachfolgend meldet sich der Benutzer A wiederum mit der Übergabe von Namen und Paßwort von einer anderen Endpunktadresse aus an, beispielsweise der Adresse des Telefonendgeräts 18, Schritt S152. Die TK-Anlage prüft nun, ob für den Benutzer A die Mehrfachregistrierung erlaubt ist. Dies kann beispielsweise im Feld "Eigenschaften" im Stammdatensatz des Benutzers A der Benutzerdatenbank festgelegt sein. Unter Stammdatensatz ist dabei ein in der Benutzerdatenbank verbleibender Datensatz zu verstehen, dem eine Hardware-ID fest zugeordnet sein kann oder nicht. Alternativ kann eine Mehrfachregistrierung für alle Benutzer erlaubt sein. Vor der Prüfung, ob für den Benutzer A die Mehrfachregistrierung erlaubt ist, wird wiederum eine Authentifizierung durchgeführt. Ist für den Benutzer A eine Mehrfachregistrierung erlaubt, vermerkt die TK-Anlage, daß der Benutzer A auf beiden Endpunktadressen (Telefonendgerät 14 und Telefonendgerät 18) zu erreichen ist.

Dieses Vermerken kann auf unterschiedliche Arten erfolgen. Entweder können in dem dem Benutzer zugeordneten Datensatz beide Hardware-ID der Telefonendgeräte 14 und 18 gespeichert werden. Alternativ kann von dem Stammdatensatz des Benutzers, in dem die Hardware-ID des Telefonendgeräts 14 abgelegt ist, eine temporäre Kopie angelegt werden, in der die Hardware-ID des Telefonendgeräts 18 gespeichert ist, sobald sich der Benutzer A an dem zweiten Telefonendgerät, in diesem Fall dem Telefonendgerät 18, anmeldet. In der temporären Kopie des Datensatzes wird neben der entsprechenden unterschiedlichen Endpunktadresse auch das Aktiv-Flag gesetzt, so daß Rufe für den entsprechenden Benutzer zu dem in der temporären Kopie angegebenen Telefonendgerät weitergeleitet werden. Die angesprochene Registrierung des Benutzers A für das zweite Telefonendgerät erfolgt in dem Schritt S154.

In einem Schritt S156 erfolgt nun eine Anmeldung des Benutzers A wiederum mit Übergabe von Namen und Paßwort von einer dritten Endpunktadresse aus, beispielsweise dem Telefonendgerät 16, siehe Schritt S156. Nach Übersenden der entsprechenden Registrierungsdaten und der Durchführung der Authentifizierung überprüft die TK-Anlage 12, ob für den Benutzer A mehr als zwei Registrierungen erlaubt sind, Schritt S158. Entsprechende Informationen können wiederum in dem dem Benutzer zugeordneten Stammdatensatz der Benutzerdatenbank abgelegt sein. Wenn für den Benutzer mehr als zwei Registrierungen erlaubt sind, vermerkt die TK-Anlage entsprechend, daß der Benutzer A an allen drei Endpunktadressen zu erreichen ist. Wenn für den Benutzer A nur zwei Registrierungen erlaubt sind, wird bei dem dargestellten Ausführungsbeispiel die vorhergehende Zweitregistrierung (Telefonendgerät 18) gelöscht und die neue Endpunktadresse (Telefonendgerät 16) akzeptiert. Bei dem gezeigten Ausführungsbeispiel, bei dem die maximale Anzahl von Registrierungen eines Benutzers auf zwei begrenzt ist, kann somit durch eine dritte Registrierung eine vorhergehende Registrierung an einem anderen Telefonendgerät wieder rückgängig gemacht werden, was vorteilhaft ist, wenn ein Benutzer vergessen hat, sich an einem entfernten Telefonendgerät abzumelden. Die letzte Mitbenutzerregistrierung kann auch dadurch rückgängig gemacht werden, daß die Person sich an ihrem heimischen Telefon, d. h. dem Telefon, dessen Hardware-ID im Stammdatensatz des Benutzers gespeichert ist, doppelt anmeldet, so daß die Mehrfachregistrierung wieder rückgängig wird. Somit ist es nicht notwendig, das Telefonendgerät, für das die Registrierung aufgehoben werden soll, vor Ort aufzusuchen, um dort die Abmeldung durchzuführen.

Geht nun ein Ruf für die Durchwahl des Benutzers A ein, so prüft die TK-Anlage, unter welchen Endpunktadressen der Benutzer A angemeldet ist, und der Ruf wird durch die TK-Anlage über das Datennetz 10 den Telefonendgeräten gemeldet, für die der Benutzer registriert ist. Im Anschluß wird der eingehende Ruf von dem Benutzer A an den beiden Telefonen angezeigt, an denen der Benutzer A registriert ist, Schritt S162.

Bei der obigen Beschreibung wurde davon ausgegangen, daß jedem Benutzer ein Stammdatensatz zugeordnet ist, der die Hardware-ID des "heimischen" Telefons des Benutzers enthält. Alternativ kann jedem Benutzer ein Datensatz in der Benutzerdatenbank zugeordnet sein, der die genannten Informationen jedoch ohne eine festgelegte Hardware-ID enthält. Meldet sich der Benutzer bei einem ersten Telefonendgerät an, so wird die Hardware-ID dieses Telefonendgeräts in den Datensatz des Benutzers geschrieben und die Aktiv-Flag gesetzt. Meldet sich der Benutzer dann an einem weiteren Telefonendgerät an, so kann die zusätzliche Hardware-ID des weiteren Endgeräts in den Benutzerdatensatz geschrieben werden oder kann alternativ wiederum eine temporäre Kopie des Datensatzes mit der Hardware-ID des anderen Telefonendgeräts erzeugt werden.

Ferner wurde in der obigen Beschreibung davon ausgegangen, daß es sich bei den Registrierungsdaten, die ein Benutzer an einem Telefonendgerät eingibt, um den Benutzernamen und ein Passwort handelt. Alternativ kann statt des Benutzernamens eine beliebige Kennung, die zur Identifikation eines Benutzers dienen kann, verwendet werden.

Bei bevorzugten Ausführungsbeispielen der vorliegenden Anmeldung wird, wie oben ausgeführt wurde, für jedes Endgerät, für das ein Benutzer registriert ist, eine Kopie des Datensatzes, Stammdatensatz oder temporäre Kopie des Datensatzes, in der Benutzerdatenbank erzeugt. Bei einer speicherintensiveren alternativen Ausführungsform könnte für jeden Benutzer eine der Anzahl der Telefonendgeräte entsprechende Anzahl von Kopien des Benutzerdatensatzes vorgesehen sein, von denen jede die Hardware-ID eines Telefonendgeräts enthält, so daß zur Registrierung eines Benutzers für ein Telefonendgerät lediglich die Aktiv-Flag des jeweiligen Datensatzes gesetzt werden müsste.

Wie oben bereits ausgeführt wurde, können in den in der Benutzerdatenbank gespeicherten Benutzerdatensätzen jeweils Informationen abgelegt werden, welche Rechte bezüglich Mehrfachregistrierungen welchen Personen zugeordnet sind. Speziell für Mehrfachregistrierungen von einzelnen Personen, die sich innerhalb einer Firma an mehrere Telefone anmelden, ist es sinnvoll, die Anzahl von Registrierungen pro Person auf zwei zu beschränken. Daneben kann es jedoch sinnvoll sein, eine größere Anzahl von Mitbenutzern pro Telefonendgerät zuzulassen, wenn das Telefonendgerät beispielsweise in einem Konferenzraum angeordnet ist und/oder die Möglichkeit bestehen soll, daß eine Mehrzahl von Mitarbeitern über dieses Telefon angesprochen werden kann.

In den obigen Fig. 5 und 6 ist jeweils das Prinzip einer zweifachen Mehrfachregistrierung dargestellt. Es ist jedoch klar, daß das Prinzip auf die Registrierung von mehr als zwei Nutzern auf einem Telefon und die Registrierung von einem Nutzer auf mehr als zwei Telefonen anwendbar ist.

Die hierin beschriebene Erfindung beruht auf einer neuartigen Nutzung der VoIP-Technologie für Mehrfachregistrierungen in Telekommunikationsanlagen und den damit neu gewonnenen Eigenschaften. Auch wenn die Mehrfachregistrierung vom Benutzer am Telefon vorgenommen wird, erfolgt die eigentliche Registrierung an der TK-Anlage und stellt somit eine Eigenschaft derselben dar. Jedoch sind auch, wie den obigen Ausführungen zu entnehmen ist, die jeweiligen Telefonendgeräte für die Durchführung einer Mehrfachregistrierung angepaßt. Insbesondere liefert die neuartige Verwaltung der Benutzerdatenbank für mehrfache Registrierungen und der dazugehörigen Sicherheitsanforderungen die beschriebene neuartige Funktionalität und damit den Nutzen für den Betreiber der Anlage.

Abhängig von den Gegebenheiten kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit der programmierbaren Telekommunikationszentrale und den programmierbaren Telefonendgeräten zusammenwirken können, daß das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem entsprechenden Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

## Patentansprüche

1. Telekommunikationszentrale (12) zum Weiterleiten von ankommenden Anrufen zu einer Mehrzahl von Telefonendgeräten (14, 16, 18), die mit der Telekommunikationszentrale (12) gekoppelt sind, mit folgenden Merkmalen:
einer Einrichtung (56) zum Speichern von Informationen hinsichtlich Benutzern und hinsichtlich Telefonendgeräten, für die jeweilige Benutzer registriert sind, wobei die Einrichtung (56) zum Speichern ermöglicht, daß ein Benutzer für mehrere Telefonendgeräte registriert ist und/oder daß mehrere Benutzer für ein Telefonendgerät registriert sind; und
eine Einrichtung (10) zum Weiterleiten von für jeweilige Benutzer ankommenden Anrufen zu allen Telefonendgeräten (14, 16, 18), für die ein jeweiliger Benutzer registriert ist, unter Verwendung der in der Einrichtung (56) zum Speichern gespeicherten Informationen.

2. Telekommunikationszentrale gemäß Anspruch 1, die ferner eine Einrichtung zum Empfangen von an einem Telefonendgerät (14, 16, 18) eingegebenen Registrierungsdaten, die einen Benutzer identifizieren, und zum Registrieren des Benutzers für das Telefonendgerät (14, 16, 18), an dem die Registrierungsdaten eingegeben wurden, durch Ablegen entsprechender Informationen in der Einrichtung (56) zum Speichern aufweist.

3. Telekommunikationszentrale gemäß Anspruch 2, bei der die Registrierungsdaten einen Benutzernamen und ein Benutzerpaßwort umfassen, wobei eine Einrichtung zum Authentifizieren des Benutzers basierend auf dem Benutzernamen und dem Benutzerpaßwort vor dem Registrieren vorgesehen ist.

4. Telekommunikationszentrale gemäß einem der Ansprüche 1 bis 3, bei der die Anzahl von Telefonendgeräten, für die ein Benutzer registriert sein darf, und/oder die Anzahl von Benutzern, die für ein Telefonendgerät registriert sein dürfen, auf eine vorbestimmte Anzahl begrenzt ist, die geringer ist als die Anzahl von mit der Telekommunikationszentrale (12) gekoppelten Telefonendgeräten (14, 16, 18).

5. Telekommunikationszentrale gemäß Anspruch 4, bei der, wenn für einen Benutzer eine weitere Registrierung erfolgen soll und damit die vorbestimmte Anzahl überschritten werden würde, Informationen bezüglich der weiteren Registrierung in der Einrichtung (56) zum Speichern abgelegt werden und automatisch Informationen bezüglich einer anderen Registrierung gelöscht werden.

6. Telekommunikationszentrale gemäß einem der Ansprüche 1 bis 5, bei der ein Benutzer, der als Letzter für ein Telefonendgerät registriert wurde, als aktiver Benutzer deklariert wird, wobei bei von dem Telefonendgerät abgehenden Anrufen eine Kennung des aktiven Benutzers gesendet wird.

7. Telekommunikationszentrale gemäß Anspruch 2, bei der, wenn in der Einrichtung zum Empfangen nacheinander zweimal Registrierungsdaten des gleichen Benutzers von dem gleichen Telefonendgerät (14, 16, 18) empfangen werden, Informationen bezüglich anderer Registrierungen dieses Benutzers gelöscht werden.

8. Telekommunikationszentrale gemäß einem der Ansprüche 1 bis 7, die ferner eine Einrichtung zum Löschen einer Registrierung eines Benutzers für ein Telefonendgerät aus der Einrichtung (56) zum Speichern auf den Empfang einer entsprechenden Abmeldeaufforderung hin aufweist.

9. Telekommunikationszentrale gemäß einem der Ansprüche 1 bis 8, bei der die Einrichtung zum Speichern eine Datenbank (56) aufweist, in der für jeden Benutzer Daten abgelegt sind, die zumindest den Namen des Benutzers, eine dem Benutzer zugeordnete Benutzerdurchwahl und Identifizierungsinformationen für das oder die Telefonendgeräte, für die der Benutzer registriert ist, aufweist.

10. Telekommunikationszentrale gemäß Anspruch 9, bei der die Datenbank für jedes Telefonendgerät (14, 16, 18), für das ein Benutzer registriert ist, einen Datensatz aufweist, der den Namen des Benutzers, die Benutzerdurchwahl, die Identifizierungsinformationen des jeweiligen Telefonendgeräts sowie eine Aktiv-Flag aufweist.

11. Telefonendgerät zur Verwendung mit einer Telekommunikationszentrale gemäß einem der Ansprüche 1 bis 10 mit folgenden Merkmalen:
einer Benutzerschnittstelle (20, 22) zum Eingeben der Registrierungsdaten in das Telefonendgerät; und
einer Einrichtung zum Weiterleiten der Registrierungsdaten zu der Telekommunikationszentrale (12).

12. Telefonendgerät gemäß Anspruch 11, bei dem die Benutzerschnittstelle (20, 22) eine Einrichtung zum Eingeben einer Abmeldeaufforderung zur Weiterleitung zu der Telekommunikationszentrale (12) aufweist.

13. Telefonendgerät gemäß Anspruch 11 oder 12, das ferner eine Einrichtung zum Deklarieren eines einer Mehrzahl von für dasselbe registrierten Benutzern als aktiver Benutzer aufweist, wobei bei von dem Telefonendgerät abgehenden Anrufen eine Kennung des aktiven Benutzers gesendet wird.

14. Verfahren zum Steuern eines Telekommunikationssystems mit einer Telekommunikationszentrale (12) und einer Mehrzahl von Telefonendgeräten (14, 16, 18), die mit der Telekommunikationszentrale (12) gekoppelt sind, mit folgenden Schritten:
Speichern (S102, S106, S154) von Informationen hinsichtlich Benutzern und hinsichtlich Telefonendgeräten (14, 16, 18), für die jeweilige Benutzer registriert sind, wobei ein Benutzer für mehrere Telefonendgeräte (14, 16, 18) registriert werden kann und/oder mehrere Benutzer für ein Telefonendgerät (14, 16, 18) registriert werden können; und
Weiterleiten (S120, S160) von für jeweilige Benutzer ankommenden Anrufen zu allen Telefonendgeräten (14, 16, 18), für die ein jeweiliger Benutzer registriert ist, unter Verwendung der gespeicherten Informationen.

15. Verfahren gemäß Anspruch 14, das ferner einen Schritt des Empfangens von an einem Telefonendgerät eingegebenen Registrierungsdaten, die einen Benutzer identifizieren, und einen Schritt des Registrierens des Benutzers für das Telefonendgerät, an dem die Registrierungsdaten eingegeben wurden, durch Speichern entsprechender Informationen aufweist.

16. Verfahren gemäß Anspruch 15, bei dem die Registrierungsdaten einen Benutzernamen und ein Benutzerpaßwort umfassen, wobei das Verfahren ferner einen Schritt des Authentifizierens des Benutzers basierend auf dem Benutzernamen und dem Benutzerpaßwort vor dem Registrieren vorgesehen ist.

17. Verfahren gemäß einem der Ansprüche 14 bis 16, bei dem die Anzahl von Telefonendgeräten, für die ein Benutzer registriert sein darf, und/oder die Anzahl von Benutzern, die für ein Telefonendgerät registriert sein dürfen, auf eine vorbestimmte Anzahl begrenzt ist, die geringer als die Anzahl von mit der Telekommunikationszentrale gekoppelten Telefonendgeräten ist.

18. Verfahren gemäß Anspruch 17, das, wenn für einen Benutzer eine weitere Registrierung erfolgen soll und damit die vorbestimmte Anzahl überschritten werden würde, ferner die Schritte des Speicherns der Informationen bezüglich der weiteren Registrierung und des automatischen Löschens der Informationen bezüglich einer anderen Registrierung aufweist.

19. Verfahren gemäß einem der Ansprüche 14 bis 18, das ferner den Schritt des Deklarierens eines Benutzers, der als Letzter für ein Telefonendgerät registriert wurde, als aktiver Benutzer und des Sendens einer Kennung des aktiven Benutzers bei von dem Telefonendgerät abgehenden Anrufen aufweist.

20. Verfahren gemäß Anspruch 19, das, wenn nacheinander zweimal Registrierungsdaten des gleichen Benutzers von dem gleichen Telefonendgerät empfangen werden, den Schritt des Löschens von Informationen bezüglich anderer Registrierungen dieses Benutzers aufweist.

21. Verfahren gemäß einem der Ansprüche 14 bis 20, das ferner einen Schritt des Löschens einer Registrierung eines Benutzers für ein Telefonendgerät auf den Empfang einer entsprechenden Abmeldeaufforderung von dem Telefonendgerät hin aufweist.

22. Verfahren gemäß einem der Ansprüche 14 bis 21, bei dem für jeden Benutzer in einer Datenbank zumindest der Name des Benutzers, eine dem Benutzer zugeordnete Benutzerdurchwahl und Identifizierungsinformationen für das oder die Telefonendgeräte, für die der Benutzer registriert ist, gespeichert werden.

23. Verfahren gemäß Anspruch 22, bei dem die Datenbank für jedes Telefonendgerät, für das ein Benutzer registriert ist, einen Datensatz aufweist, der den Namen des Benutzers, die Benutzerdurchwahl, die Identifizierungsinformationen des Telefonendgeräts sowie eine Aktiv-Flag aufweist.

24. Computerprogramm mit einem Programmcode zur Durchführung des Verfahrens gemäß einem der Ansprüche 14 bis 23, wenn das Programm auf einem Computer durchgeführt wird.
